# EUROPEAN PATENT SPECIFICATION

(11) **EP 1 127 855 B1**
(45) Date of publication and mention of the grant of the patent: **20.04.2005**
(21) Application number: 01103872.6
(22) Date of filing: 16.02.2001
(51) Int. Cl.: C03B 9/36, C03B 9/16

(54) **Method for producing hollow glass articles and molding machine implementing such a method**
Verfahren zur Herstellung von Hohlglaswaren und Maschine zu seiner Herstellung
Procédé de fabrication d' objets en verre creux et machine pour appliquer ledit procédé

(30) Priority: 22.02.2000 IT TO000166
(43) Date of publication of application: 29.08.2001
(73) Proprietor: BOTTERO S.p.A., 12010 Cuneo (IT)
(72) Inventor: Sesia, Carlo, 12011 Borgo San Dalmazzo (IT); Borsarelli, Gianclaudio, 12100 Cuneo (IT); Viada, Bruno, 12010 Madonna delle Grazie (IT)
(74) Representative: Eccetto, Mauro

(56) References cited:
- EP-A- 0 190 008
- US-A- 3 281 230
- US-A- 3 407 055

## Description

The present invention relates to a method of blow molding hollow glass articles. Hollow glass articles, in particular bottles and vessels, are produced on so-called I.S. molding machines comprising a number of molding sections. Each molding section comprises a rough blow mold and a finish blow mold, each of which can be opened and comprises a bottom wall, and two facing lateral walls movable with respect to each other to and from a closed position in which the lateral walls are forced against each other and define, together with the bottom wall, a cavity for receiving a respective mass of glass for shaping.

Each blow mold has an air nozzle connected to a compressed-air source to feed a jet of air into the mold to shape the mass of glass. The characteristics of the air jet are normally set manually, before the air is fed into the mold, according to the characteristics of the glass and the mold, and are maintained constant throughout the molding process.

Once deposited inside the rough blow mold cavity, the mass of glass must first be made to adhere to the bottom inner surface of the mold by means of a settling air jet emitted by a nozzle over the mold.

The methods implemented by known molding machines of the type described are far from satisfactory in terms of molding time and, above all, the quality of the articles, which may vary from one to another in shape and surface finish.

This is mainly due to the fact that the pressure of the air jet set manually at the start of the molding process must be such as to enable the air to be fed through the mass of glass so as to distribute the mass inside the mold, but must also be such as to prevent the molds from opening, while at the same time keeping the mass in contact at all times with the surfaces of the mold, even following partial cooling of the glass on contacting the mold surfaces.

Consequently, the pressure set at the start of the molding process is invariably a compromise in an attempt to meet all the above requirements.

The same also applies at the settling stage, at which the pressure of the settling air jet is also a compromise choice to ensure the glass adheres to the rough mold, while at the same time preventing excessive cooling of the glass or excessive thrust on the mold walls.

Two different ways to vary the pressure of the air jet during the molding process are known from EP-A-0 190 008 and US-A-3 281 230.

It is an object of the present invention to provide a method of producing hollow glass articles, designed to provide a straightforward, low-cost solution to the above problems.

According to the present invention, there is provided a method of producing hollow glass articles, the method comprising the stages of depositing a mass of glass for shaping inside a respective mold; and feeding an air jet into said mold to shape said mass of glass; characterized in that said mass of glass is shaped while varying the characteristics of said air jet, during the shaping of the mass of glass, on the basis of a memorized reference time profile.

The present invention also relates to a machine for molding hollow glass articles.

According to the present invention, there is provided a machine for molding hollow glass articles, the machine comprising a mold for receiving a respective mass of glass for shaping; and air feeding means for feeding a shaping air jet into said mold; and being characterized by also comprising memory means for memorizing a reference time profile; and adjusting means for varying the characteristics of said shaping air jet, during the shaping of said mass of glass, on the basis of said reference time profile.

A non-limiting embodiment of the invention will be described by way of example with reference to the accompanying drawings, in which:
Figure 1 shows, schematically, a preferred embodiment of the machine for implementing the method of producing hollow glass articles according to the present invention;
Figures 2 and 3 show two example graphs relative to operation of the Figure 1 machine.

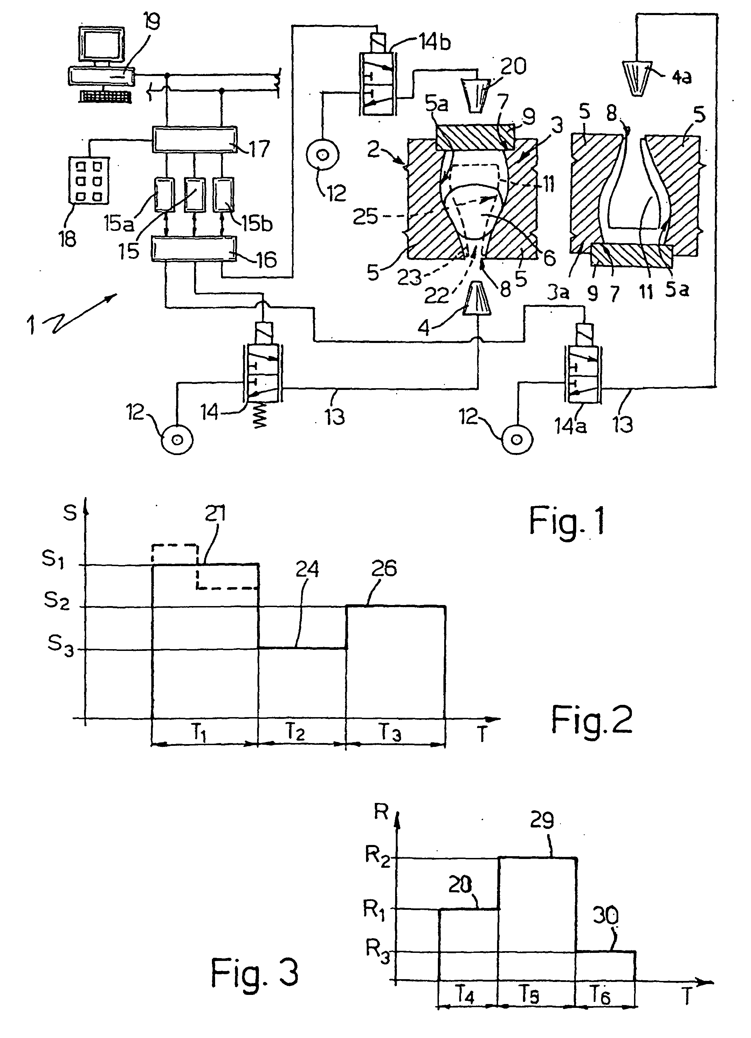

Number 1 in Figure 1 indicates a so-called I.S. machine for molding hollow glass articles and comprising a number of sections, only one of which is shown schematically and indicated 2.

Section 2 provides for successively blow molding glass articles from respective masses of molten glass supplied by a dispensing device (not shown) of machine 1, and comprises a rough mold 3 and a finish mold 3a, which are similar and have respective air nozzles 4 and 4a, and a device (not shown) for transferring the semifinished glass articles from mold 3 to mold 3a.

In the following description, reference is made to mold 3, the component parts of mold 3a being indicated, where possible, using the same reference numbers as for mold 3, and it being understood that the following considerations also apply equally to mold 3a.

With reference to Figure 1, mold 3 comprises two facing, hollow half-molds 5, which are forced releasably against each other by a pneumatic actuator (not shown), and define a cavity 5a for receiving a mass 6 of molten glass and having two opposite openings 7 and 8. Opening 7 defines the inlet through which mass 6 is fed by the dispensing device, and is closed by a plug 9; and opening 8 defines the inlet for a shaping air jet emitted by nozzle 4 of mold 3 to form a semifinished glass article 11 (shown by the dash line in mold 3) from mass 6.

Nozzle 4 is connected to a compressed-air source 12 by a respective pneumatic circuit 13 comprising a continuously positioned, three-way, normally-closed, monostable, proportional pneumatic solenoid valve 14 (shown schematically).

In actual use, solenoid valve 14 provides, when molding glass article 11, for regulating the air flow upstream from nozzle 4 on the basis of a reference time profile selectable from a number of time-modulated, i.e. time-variable, reference profiles stored in a relative memory unit 15 (shown schematically). Memory unit 15 is connected, on one side, to a control unit 16 for controlling solenoid valve 14 according to the relative reference time profile, and, on the other side, to a unit 17 for controlling, timing and synchronizing section 2.

Unit 17 is connected to the other sections of machine 1 to transmit and receive respective molding process synchronizing signals, and is controlled from a push-button panel 18 forming part of section 2 and used, in particular, for starting and stopping section 2, and from a terminal 19 forming part of machine 1 and for entering and altering data relative to all the machine 1 sections.

Like mold 3, mold 3a has a memory unit 15a containing a number of reference time profiles by which unit 16 controls a solenoid valve 14a (shown schematically) similar to solenoid valve 14 and for regulating the air flow fed by nozzle 4a into mold 3a.

With reference to Figure 1, section 2 also comprises an air nozzle 20 associated with and located over mold 3, and which provides for feeding an air jet through opening 7 to settle the mass 6 of glass just deposited inside cavity 5a, so that the glass adheres to the bottom surface defining cavity 5a.

Nozzle 20 is connected to compressed-air source 12 by a respective pneumatic circuit comprising a solenoid valve 14b (shown schematically) similar to solenoid valves 14 and 14a and controlled by unit 16, according to a reference time profile selectable from a number of reference profiles stored in a relative memory unit 15b, to regulate the air jet emitted by nozzle 20.

In actual use, the best reference time profiles are determined on the basis of preliminary tests, as a function of the type of article to be molded, mold 3, 3a, nozzle 4, 4a, 20, the type and quantity of glass, and with a view to preventing mold 3, 3a from opening during the molding process.

Before commencing a series of production cycles, for each solenoid valve 14, 14a, 14b in section 2, the operator selects on terminal 19 a respective reference time profile from those memorized in respective unit 15, 15a, 15b. Unit 16 controls solenoid valves 14, 14a, 14b according to the respective selected reference time profiles to regulate one of the characteristics, i.e. speed, flow rate or pressure, of the air jets fed into molds 3 and 3a by nozzles 4, 4a and 20, and repeats the selected reference time profiles at each production cycle pending further intervention by the operator, so that adjustment is open-loop controlled.

More specifically, solenoid valves 14, 14a, 14b are pressure regulating valves, and Figures 2 and 3 show example graphs, as a function of time T, of independent reference time profiles S and R by which unit 16 controls respective solenoid valves 14 and 14a to regulate the pressure of the air jet fed by nozzle 4 into mold 3 and by nozzle 4a into mold 3a respectively in the course of the production cycle.

Profile S has a step pattern, each step in which corresponds to a pressure value of the air jet upstream from nozzle 4, and therefore to a pressure value of the air jet fed into mold 3.

Profile S comprises a starting or first step 21 of duration T1 and constant amplitude S1, so that control unit 16 controls solenoid valve 14 to increase the air pressures upstream from nozzle 4 and inside mold 3 to respective values corresponding to amplitude S1. At this molding stage, the air jet emitted by nozzle 4, as controlled according to step 21, forms an inlet conduit 22 in the mass 6 of glass, and hence a bored end portion 23 eventually defining the neck of the finished glass article.

Profile S also comprises a following or second step 24 of duration T2 and constant amplitude S2 lower than S1, so that control unit 16 controls solenoid valve 14 to reduce the air pressures upstream from nozzle 4 and inside mold 3 to respective values corresponding to amplitude S2. At this molding stage, the air jet fed into conduit 22, as controlled according to step 24, forms inside mass 6 a cavity 25 communicating with conduit 22, and spreads the glass inside mold 3.

Finally, profile S also comprises a third step 26 of duration T3 and constant amplitude S3 between S1 and S2, so that control unit 16 controls solenoid valve 14 to increase the air pressure upstream from nozzle 4 and inside mold 3 to respective values corresponding to amplitude S3. At this molding stage, the air jet fed into cavity 25, as controlled according to step 26, withdraws heat from the glass article 11 being molded, and keeps the glass in contact with the inner surface of mold 3 to prevent the glass from shrinking as it cools.

In a variation, at least one of said stages may be performed on the basis of a portion of profile S comprising two or more steps, such as the portion shown by the dash line in Figure 2 and which replaces step 21.

With reference to Figure 3, profile R also has a step pattern, each step in which corresponds to a pressure value of the air jet upstream from nozzle 4a, and therefore to a pressure value of the air jet fed into mold 3a.

Molding of the finished glass article inside mold 3a comprises a blowing stage in which the semifinished article 11 deposited inside mold 3a is blown so that the glass spreads and adheres to the inner surface of mold 3a; and a subsequent cooling stage in which article 11 is cooled, while still keeping the glass in contact with the inner surface of mold 3a.

The blowing stage is performed by controlling solenoid valve 14a according to a first step 28 of profile R of amplitude R1 and duration T4; while the cooling stage is performed by controlling solenoid valve 14a according to a second, intermediate, step 29 of duration T5 and amplitude R2 higher than R1, and a final or third step 30 of duration T6 and amplitude R3 lower than the amplitude of step 29, so as to reduce the air pressure and the forces applied to mold 3a, and so prevent mold 3a from opening and excessive cooling of the mouth of the article being molded.

The reference time profile (not shown) selected to control solenoid valve 14b also varies with time, and in particular in steps, so as to prevent excessive cooling of the mass 6 of glass just deposited inside mold 3.

In the event of variations, during the shaping process in mold 3 or 3a, in the operating conditions of machine 1 and/or in the characteristics of the glass, and hence the quality of the semifinished or finished glass article, the operator selects on terminal 19 another of the memorized reference time profiles, or changes at least one of steps 21, 24, 26, 28, 29, 30 of profiles S and R to obtain a new reference time profile by which control unit 16 controls solenoid valve 14 or 14a in subsequent production cycles.

Machine 1 therefore provides for optimizing molding time, and for obtaining optimum consistent shape and quality from one article to another.

That is, machine 1 provides, when shaping the mass 6 of glass, for regulating the characteristics of the air jet emitted by nozzle 4 on the basis of time-modulated profiles S and R, so as to best meet the various requirements of the molding process of article 11 as a whole, unlike known solutions in which air pressure is set to a constant compromise value.

More specifically, the pressure of the air jet fed into molds 3, 3a is regulated during the production cycle to prevent molds 3, 3a from opening, to form air inlet conduit 22 in mass 6, and to spread the glass evenly and quickly inside molds 3, 3a, while at the same time keeping the glass in contact with the walls of molds 3, 3a.

Moreover, the step pattern of profiles S and R provides for simplifying storage of profiles S, R and control of solenoid valves 14, 14a and air pressure.

Clearly, changes may be made to machine 1 and the method described herein without, however, departing from the scope of the present invention.

In particular, the reference time profiles by which to control solenoid valves 14, 14a, 14b in section 2 and the other solenoid valves on machine 1 may have different patterns from those shown by way of example. Profiles S, R may comprise modulated portions comprising steps differing in amplitude from those of steps 21, 24, 26, 28, 29, 30, and/or rising or falling connecting ramps.

The cavity 25 formation stage and article 11 cooling stage may be performed controlling solenoid valve 14 on the basis of one step of profile S, as opposed to two steps 24 and 26.

Finally, at least one of solenoid valves 14, 14a may be a flow regulating valve; in which case, at least one reference time profile for controlling the relative solenoid valve to achieve a given desired variation in the flow rate of the air flow emitted by relative nozzle 4, 4a is memorized in relative unit 15, 15a. The reference time profile must, obviously, be such as to achieve a pressure pattern similar to those described and obtained controlling the pressure regulating solenoid valves on the basis of profiles S, R.

## Claims

1. A method of producing hollow glass articles, the method comprising the stages of depositing a mass (6)(11) of glass for shaping inside a respective mold (3)(3a); and feeding a shaping air jet into said mold (3)(3a) to shape said mass (6)(11) of glass; **characterized in that** said shaping air jet is fed in while varying at least one characteristic of said air jet, during the shaping of said mass (6)(11) of glass, on the basis of a memorized reference time profile (S)(R).

2. A method as claimed in Claim 1, **characterized in that** the at least one characteristic of said shaping air jet is the pressure of the shaping air jet fed into said mold (3)(3a).

3. A method as claimed in Claim 1 or 2, **characterized in that** the at least one characteristic of said shaping air jet is the flow rate of the shaping air jet fed into said mold (3)(3a).

4. A method as claimed in Claim 2 or 3, **characterized in that** said regulation is made by controlling proportional valve means (14)(14a)(14b) on the basis of said reference time profile (S)(R).

5. A method as claimed in Claim 4, **characterized in that** said reference time profile (S)(R) is a step time profile (21, 24, 26)(28, 29, 30).

6. A method as claimed in Claim 5, **characterized by** comprising the stage of forming an inlet conduit (22) in said mass (6) of glass; said inlet conduit (22) being formed by controlling said proportional valve means (14) according to a first portion (21) of said reference time profile (S); said first portion (21) comprising at least one first segment (21) of constant amplitude.

7. A method as claimed in Claim 6, **characterized by** comprising the further stage of forming in said mass (6) of glass a cavity (25) communicating with said inlet conduit (22); said cavity (25) being formed by controlling said proportional valve means (14) according to a second portion (24) of said reference time profile (S); said second portion (24) comprising at least one second segment (24) of constant amplitude differing in amplitude from said first segment (21).

8. A method as claimed in Claim 7, **characterized by** comprising the further stage of cooling said mass (6)(11) of glass inside said mold (3)(3a); said mass (6)(11) of glass being cooled by controlling said proportional valve means (14)(14a) according to a third portion (26)(29, 30) of said reference time profile (S)(R); said third portion (26)(29, 30) comprising at least one third segment (26)(29, 30) of constant amplitude.

9. A method as claimed in Claim 8, **characterized in that** said third segment (26)(29, 30) differs in amplitude from one of said first and second segments (21, 24)(28).

10. A method as claimed in Claim 8 or 9, **characterized by** modifying at least one of said first, second and third portions (21, 24, 26)(28, 29, 30) following shaping of said mass (6) of glass.

11. A machine (1) for molding hollow glass articles, the machine comprising a mold (3)(3a) for receiving a respective mass (6)(11) of glass for shaping; and air feeding means (4)(4a)(20) for feeding a shaping air jet into said mold (3)(3a); and being **characterized by** also comprising memory means (15)(15a)(15b) for memorizing a reference time profile (S)(R); and adjusting means (14)(14a)(14b) for varying the characteristics of said shaping air jet, during the shaping of said mass (6)(11) of glass, on the basis of said reference time profile (S)(R).

12. A machine as claimed in Claim 11, **characterized in that** said adjusting means (14)(14a)(14b) comprise a proportional pneumatic solenoid valve (14)(14a)(14a) for varying the pressure of said shaping air jet.

13. A machine as claimed in Claim 11 or 12, **characterized in that** said adjusting means (14)(14a)(14b) comprise a proportional pneumatic solenoid valve (14)(14a)(14a) for varying the flow rate of said shaping air jet.

14. A machine as claimed in any one of Claims 11 to 13, **characterized by** comprising setting means (19) for modifying at least one portion (21, 24, 26)(28, 29, 30) of said reference time profile (S)(R) following shaping of said mass (6)(11) of glass.

## Patentansprüche

1. Verfahren zum Herstellen von Glas-Hohlkörpern, wobei das Verfahren die Schritte aufweist des Deponierens einer Glasmenge (6)(11) zum Formen innerhalb einer entsprechenden Form (3)(3a), und des Leitens eines formenden Luftstrahls in die Form (3)(3a), um die Glasmenge (6)(11) zu formen; **dadurch gekennzeichnet, dass** der formende Luftstrahl zugeführt wird, während zumindest eine Kenngröße des Luftstrahls während des Formens der Glasmenge (6)(11) auf der Basis eines gespeicherten Referenz-Zeitprofils (S)(R) variiert wird.

2. Verfahren gemäß Anspruch 1, **dadurch gekennzeichnet, dass** die zumindest eine Kenngröße des formenden Luftstrahls der Druck des formenden Luftstrahls ist, der in die Form (3)(3a) geleitet wird.

3. Verfahren gemäß Anspruch 1 oder 2, **dadurch gekennzeichnet, dass** die zumindest eine Kenngröße des formenden Luftstrahls die Flussrate des formenden Luftstrahls ist, der in die Form (3, 3a) geleitet wird.

4. Verfahren gemäß Anspruch 2 oder 3, **dadurch gekennzeichnet, dass** die Regelung durch Ansteuern von Proportionalventil-Einrichtungen (14)(14a)(14b) auf der Basis des Referenz-Zeitprofils (S)(R) vorgenommen wird.

5. Verfahren gemäß Anspruch 4, **dadurch gekennzeichnet, dass** das Referenz-Zeitprofil (S)(R) ein Stufen-Zeitprofil (21, 24, 26)(28, 29, 30) ist.

6. Verfahren gemäß Anspruch 5, **dadurch gekennzeichnet, dass** es den Schritt des Formens eines Einlasskanals (22) in der Glasmenge (6) aufweist, wobei der Einlasskanal (22) durch Ansteuern der Proportionalventil -Einrichtungen (14) gemäß einem ersten Abschnitt (21) des Referenz-Zeitprofils (S) geformt wird, wobei der erste Abschnitt (21) zumindest ein erstes Segment (21) konstanter Amplitude aufweist.

7. Verfahren gemäß Anspruch 6, **gekennzeichnet durch** den weiteren Schritt des Formens eines mit dem Einlasskanal (22) in Verbindung stehenden Hohlraumes (25) in der Glasmenge (6), wobei der Hohlraum (25) **durch** Ansteuern der Proportionalventil-Einrichtungen (14) gemäß einem zweiten Abschnitt (24) des Referenz-Zeitprofils (S) geformt wird, wobei der zweite Abschnitt (24) zumindest ein zweites Segment (24) konstanter Amplitude aufweist, welche sich von der Amplitude des ersten Segments (21) unterscheidet.

8. Verfahren gemäß Anspruch 7, **gekennzeichnet durch** den weiteren Schritt des Abkühlens der Glasmenge (6)(11) innerhalb der Form (3)(3a), wobei die Glasmenge (6)(11) **durch** Ansteuern der Proportionalventil-Einrichtungen (14)(14a) gemäß einem dritten Abschnitt (26)(29, 30) des Referenz-zeitprofils (S, R) abgekühlt wird, wobei der dritte Abschnitt (26)(29, 30) zumindest ein drittes Segment (26)(29, 30) konstanter Amplitude aufweist.

9. Verfahren gemäß Anspruch 8, **dadurch gekennzeichnet, dass** sich das dritte Segment (26)(29, 30) in seiner Amplitude von der des ersten und des zweiten Segments (21, 24)(28) unterscheidet.

10. Verfahren gemäß Anspruch 8 oder 9, **gekennzeichnet durch** das Verändern zumindest eines des ersten, zweiten oder dritten Abschnitts (21, 24, 26)(28, 29, 30) folgend dem Formen der Glasmenge (6).

11. Einrichtung (1) zum Formen von Glas-Hohlkörpern, wobei die Einrichtung eine Form (3)(3a) zum Aufnehmen einer entsprechenden Glasmenge (6)(11) zum Formen und Luftzuführungseinrichtungen (4)(4a)(20) zum Leiten eines formenden Luftstrahls in die Form (3)(3a) aufweist und **dadurch gekennzeichnet ist, dass** sie auch Speichereinrichtungen (15)(15a)(15b) zum Speichern eines Referenz-Zeitprofils (S)(R) und Stelleinrichtungen (14)(14a)(14b) zum verändern der Kenngrößen des formenden Luftstrahls während des Formens der Glasmenge (6)(11) auf der Basis des Referenz-Zeitprofils (S)(R) aufweist.

12. Einrichtung gemäß Anspruch 11, **dadurch gekennzeichnet, dass** die Stelleinrichtungen (14)(14a)(14b) ein Pneumatik-proportional-Magnetventil (14)(14a)(14b) zum Variieren des Drucks des formenden Luftstrahls aufweisen.

13. Einrichtung gemäß Anspruch 11 oder 12, **dadurch gekennzeichnet, dass** die Stelleinrichtungen (14)(14a)(14b) ein Pneumatik-Proportional-Magnetventil (14)(14a)(14b) zum Verändern der Flussrate des formenden Luftstrahls aufweisen.

14. Einrichtung gemäß einem der Ansprüche 11 bis 13, **dadurch gekennzeichnet, dass** sie eine Einstelleinrichtung (19) zum verändern zumindest eines Abschnitts (21, 24, 26)(28, 29, 30) des Referenz-Zeitprofils (S)(R) folgend dem Formen der Glasmenge (6)(11) aufweist.

## Revendications

1. Procédé de fabrication d'articles en verre creux, le procédé comprenant les étapes de dépôt d'une masse de verre (6) (11) pour façonnage dans un moule respectif (3) (3a) et d'introduction d'un jet d'air de façonnage dans ledit moule (3) (3a) pour façonner ladite masse de verre (6) (11), **caractérisé en ce que** ledit jet d'air de façonnage est introduit tout en variant au moins une caractéristique dudit jet d'air, pendant le façonnage de ladite masse de verre (6) (11), sur la base d'un profil de temps de référence mémorisé (S) (R).

2. Procédé tel que revendiqué dans la revendication 1, **caractérisé en ce que** la au moins une caractéristique dudit jet d'air de façonnage est la pression du jet d'air de façonnage introduit dans ledit moule (3) (3a).

3. Procédé tel que revendiqué dans la revendication 1 ou 2, **caractérisé en ce que** la au moins une caractéristique dudit jet d'air de façonnage est le débit du flux du jet d'air de façonnage introduit dans ledit moule (3) (3a).

4. Procédé tel que revendiqué dans la revendication 2 ou 3, **caractérisé en ce que** ladite régulation est obtenue en commandant des moyens à vanne proportionnelle (14) (14a) (14b) sur la base dudit profil de temps de référence (S) (R).

5. Procédé tel que revendiqué dans la revendication 4, **caractérisé en ce que** ledit profil de temps de référence (S) (R) est un profil de temps par paliers (21, 24, 26) (28, 29, 30).

6. Procédé tel que revendiqué dans la revendication 5, **caractérisé par le fait qu'**il comprend l'étape de formation d'un conduit d'entrée (22) dans ladite masse de verre (6), ledit conduit d'entrée (22) étant formé en commandant lesdits moyens à vanne proportionnelle (14) selon une première partie (21) dudit profil de temps de référence (S), ladite première partie (21) comprenant au moins un premier secteur (21) d'amplitude constante.

7. Procédé tel que revendiqué dans la revendication 6, **caractérisé par le fait qu'**il comprend l'étape supplémentaire de formation, dans ladite masse de verre (6), d'une cavité (25) communiquant avec ledit conduit d'entrée (22), ladite cavité (25) étant formée en commandant lesdits moyens à vanne proportionnelle (14) selon une deuxième partie (24) dudit profil de temps de référence (S), ladite deuxième partie (24) comprenant au moins un deuxième secteur (24) d'amplitude constante différant en amplitude dudit premier secteur (21).

8. Procédé tel que revendiqué dans la revendication 7, **caractérisé par le fait qu'**il comprend l'étape supplémentaire de refroidissement de ladite masse de verre (6) (11) dans ledit moule (3) (3a), ladite masse de verre (6) (11) étant refroidie en commandant lesdits moyens à vanne proportionnelle (14) (14a) selon une troisième partie (26) (29, 30) dudit profil de temps de référence (S) (R), ladite troisième partie (26) (29, 30) comprenant au moins un troisième secteur (26) (29, 30) d'amplitude constante.

9. Procédé tel que revendiqué dans la revendication 8, **caractérisé en ce que** le troisième secteur (26) (29, 30) diffère en amplitude d'un desdits premier et deuxième secteurs (21, 24) (28).

10. Procédé tel que revendiqué dans la revendication 8 ou 9, **caractérisé par le fait que** l'on modifie au moins un desdits premier, deuxième et troisième secteurs (21, 24, 26) (28, 29, 30) suivant le façonnage de ladite masse de verre (6).

11. Machine (1) pour mouler des articles en verre creux, la machine comprenant un moule (3) (3a) pour recevoir une masse de verre respective (6) (11) à façonner, et des moyens d'introduction d'air (4) (4a) (20) pour introduire un jet d'air de façonnage dans ledit moule (3) (3a), et étant **caractérisée par le fait qu'**elle comprend également des moyens de mémorisation (15) (15a) (15b) pour mémoriser un profil de temps de référence (S) (R), et des moyens de réglage (14) (14a) (14b) pour modifier les caractéristiques du jet d'air de façonnage, pendant le façonnage de ladite masse de verre (6) (11), sur la base dudit profil de temps de référence (S) (R).

12. Machine telle que revendiquée dans la revendication 11, **caractérisée en ce que** lesdits moyens de réglage (14) (14a) (14b) comprennent une électrovanne pneumatique proportionnelle (14) (14a) (14a) pour modifier la pression dudit jet d'air de façonnage.

13. Machine telle que revendiquée dans la revendication 11 ou 12, **caractérisée en ce que** lesdits moyens de réglage (14) (14a) (14b) comprennent une électrovanne pneumatique proportionnelle (14) (14a) (14a) pour modifier le débit du flux dudit jet d'air de façonnage.

14. Machine telle que revendiquée dans l'une quelconque des revendications 11 à 13, **caractérisée par le fait qu'**elle comprend des moyens de réglage (19) pour modifier au moins une partie (21, 24, 26) (28, 29, 30) dudit profil de référence de temps (S) (R) suivant le façonnage de ladite masse de verre (6) (11).
